Europäisches Patentamt

(19) European Patent Office

Office européen des brevets

(11) Publication number: **0 104 921**
**A2**

## (12) EUROPEAN PATENT APPLICATION

(21) Application number: 83305719.3

(22) Date of filing: 26.09.83

(51) Int. Cl.³: **F 02 C 7/36**

(30) Priority: 27.09.82 US 424499

(43) Date of publication of application:
04.04.84 Bulletin 84/14

(84) Designated Contracting States:
DE FR GB IT SE

(71) Applicant: THE GARRETT CORPORATION
9851-9951 Sepulveda Boulevard P.O. Box 92248
Los Angeles, California 90009(US)

(72) Inventor: Mason, John L.
1132, Via Mirabel
Palos Verdes Estates California 90274(US)

(74) Representative: Arthur, George Fitzgerald et al,
KILBURN & STRODE 30, John Street
London WC1N 2DD(GB)

(54) Turbine engine system.

(57) A gas turbine engine system (10) for powering a ground vehicle such as an automobile, truck, bus or other vehicle, is provided with a continuously-variable transmission (18) in the form of a declutchable toroidal traction drive, whose two drive lobes (48,50) are coupled through reduction gearing (40,42 and 44,46) respectively to the shaft (30) of a gas generator section (12) of the engine system (10) and to the output shaft (16) of a free power turbine (14) driven by the high-energy combustion gases of the gas generator section (12). A clutch (58) is provided for selectively engaging the toroidal traction drive (18), by axially moving one of its lobes (48,50) towards the other, for bidirectional mechanical power transfer between the free power turbine (14) and the gas generator (12). Power may be transferred from the free power turbine (14) to the gas generator section (12) to slow rotation of the powe turbine and provide dynamic braking and also during vehicle transmission speed shifts. Power may be transferred from the gas generator section (12) to the power turbine (14) during part-load engine operation to improve the efficiency of operation of the gas generator section in that mode.

Croydon Printing Company Ltd.

## TURBINE ENGINE SYSTEM

This invention relates generally to turbine engine systems of the type including a turbo-compressor gas generator section for driving a free power output turbine. More specifically, this invention relates to improved apparatus and methods for bidirectional power transfer between the turbocompressor gas generator section and free power turbine in a gas turbine engine system.

Gas turbine engines in general are known in the art to include a rotating compressor for supplying a relatively high mass flow of air to a combustor for combustion with an appropriate quantity of fuel, resulting in a relatively high flow of high energy exhaust gases which rotatably drive one or more turbines. The driven turbines extract power from the exhaust gases to rotatably drive the compressor and further to provide a power source for connection to an appropriate engine load.

Gas turbine engines of this general type offer significant advantages over more conventional reciprocating internal combustion engines, particularly with respect to increased power-to-weight ratios, improved fuel economy, reduced levels of toxic exhaust emissions, increased overall operational efficiency, and the ability to utilise different fuels on an economic basis. As a result, gas turbine engines have gained wide acceptance for use as aircraft engines. Moreover, various attempts have been made to adapt gas turbine engines for use as the power plant in ground vehicles, such as trucks, buses, automobiles, and the like , but these attempts have met with only limited success due to certain inherent operational disadvantages of gas turbines in a ground vehicle environment.

More specifically, in a ground vehicle, the output drive shaft of the vehicle engine is desirably adapted for zero rotation with the engine running whenever vehicle motion is stopped, while permitting controlled application of torque thereto to accelerate the drive shaft and the vehicle to a selected speed. To meet these operational requirements, gas turbine engines for ground vehicle applications normally include at least two driven turbines, wherein one turbine drives the compressor via a common shaft thereby providing a so-called gas generator section and the other turbine constitutes a so-called free power turbine carried for rotation by a separate shaft constituting the output drive shaft of the engine. However, when accelerated to a relatively high rotational speed, such as during forward motion of the vehicle, this free power turbine exhibits a relatively high rotational inertia thereby failing to provide immediate dynamic braking of relatively high horsepower of the drive shaft simply by a reduction of fuel flow to the engine, as is the case with conventional reciprocating engines. Such engine braking is, of course, instrumental in slowing the vehicle to a halt and further in slowing drive shaft rotation during shifting of a conventional transmission from one speed range to another.

A variety of proposed engine modifications are known which are intended to improve engine dynamic braking characteristics. For example, variable turbine guide vanes responsive to fuel flow or other engine parameters have been proposed to slow rotation of the free power turbine and thereby provide the desired braking of drive shaft rotation. However, variable turbine guide vanes and the requisite control systems therefor constitute relatively complex structures, which significantly increase the cost of the engine and the number of mechanical components subject to periodic failure. Moreover, variable guide vanes tend to waste some of the energy available in the driving exhaust gases whereby engine fuel economy and overall efficiency are not optimised.

Other proposals are known wherein the 'free power turbine is mechanically coupled with the gas generator section whenever dynamic braking of the power turbine is desired, resulting in extraction of energy from the power turbine by the gas generator section to slow power turbine rotation. Such proposals have suggested a variety of power transfer mechanisms including, for example, direct gearing connections or hydraulic devices,such as swash plate motor-pumps all of which are generally incapable of accommodating the high rotational shaft speeds encountered in modern gas turbine engines. Alternatively, relatively complex multiple plate hydraulic or friction clutches have been proposed, such as that shown in our U.S.

Patent No. 4,209,979. However, these latter types of devices are normally operable only when a predetermined rotational speed match exists between the free power turbine and the gas generator section, whereas this speed match may not be present over a wide range of engine operation. Accordingly, there exists a need for an improved yet economical system for providing significant levels of dynamic braking in a gas turbine engine adapted for use in a ground vehicle.

In some instances, it may be further desirable to supplement driving of the free power turbine by mechanically coupling the gas generator section with the free power turbine. For example, such supplemental driving may be desirable during part-load operation to permit the gas generator section to operate more closely to its design point for improved fuel economy and overall efficiency. However, prior proposed power transfer devices coupled between the free power turbine and the gas generator section either have not accommodated bidirectional power transfer or alternatively, have been generally incapable of operation at the high rotational speeds encountered by modern gas turbine engines.

The present invention overcomes the problems and disadvantages of the prior art by providing an improved gas turbine engine system including a declutchable non-hydraulic transmission of a particular configuration and which is continuously variable within a predetermined speed range for bidirectional power transfer between a gas generator section and a free power turbine in a gas turbine engine of the type adapted for ground vehicle use.

In accordance with the invention, a gas turbine engine system, particularly, but not exclusively, for use in a ground vehicle such as a truck, bus, automobile, or the like comprises a gas turbine engine including a turbo-compressor gas generator section and a free power turbine, is provided with apparatus for transferring power bidirectionally between the gas generator section and the power turbine, said apparatus comprising a non-hydraulic continuously variable declutchable transmission (18) having a pair of engageable drive members (48,50) coupled respectively for rotation with the gas generator section and the power turbine; and releasable clutch means (58) for selectively engaging said drive members (48,50) one with the other for mechanically transferring power bidirectionally between said gas generator section (12) and said free power turbine (14).

The continuously variable transmission permits power transfer from the free power turbine to the gas generator section for improved dynamic engine braking and/or power turbine speed control during shifting from one speed range to another. In addition, the transmission permits transfer of power from the gas generator section to the free power turbine to supplement the net power output of the turbine for more efficient engine operation, particularly during part-load conditions.

In one preferred form of the invention, the continuously-variable transmission may comprise a toroidal traction drive mechanism, the clutch means being operable to controllably displace at least one of the said drive members ( 48,50) of the toroidal traction drive mechanism relative to the other said drive member for selective engagement and disengagement of the toroidal traction drive mechanism.

The toroidal traction drive may have a pair of lobes coupled respectively for rotation with the gas generator section and the free power turbine and interengageable by means of a set of traction drive rollers. At least one of the toroidal traction drive lobes is movable axially relative to the other to engage or disengage the traction drive and thereby control power transfer. This engagement and disengagement of the traction drive lobes is responsive to an appropriate control signal, such as a speed ratio signal indicative of the speed ratio between the gas generator section and the free power turbine, wherein this signal may further be used to control the drive ratio setting of the rollers of the toroidal traction drive.

In operation, the lobes of the toroidal traction drive can be engaged when dynamic engine braking is desired, such as when fuel flow to the gas generator section is reduced preparatory to slowing of the engine to a halt or preparatory to shifting from one speed range to another.

In this mode, the rapidly rotating free power turbine is connected to drive the gas generator section in addition to the vehicle drive wheels whereby power is transferred from the turbine to slow rotation thereof and thereby achieve substantial dynamic braking. Importantly, the transferred power is stored by the gas generator section where it can subsequently be given up to the engine air flow for transfer back to the free power turbine.

During part-load operation, the toroidal traction drive can be engaged to transfer power from the gas generator section to the free power turbine thereby supplementing the net power output of the power turbine. This advantageously permits the gas generator section to operate closer to its design point through a broader range of engine operation thereby achieving substantial improvements in overall engine efficiency.

The invention from another aspect comprises, for use in a gas turbine system including a turbo-compressor gas generator section for driving a free power turbine, a method of transferring power between the gas generator section and the power turbine, comprising the steps of: coupling a non-hydraulic continuously-variable selectively-disengageable transmission (18) having a pair of drive members (48,50) between the gas generator section (12) and the free power turbine (14) with one of the drive members (48) coupled for rotation with the gas generator section (12) and the other of the drive members (50) coupled for rotation with the power turbine (14); and selectively engaging and disengaging the transmission (18) in response to system operating parameters to selectively transfer power between the gas generator section and the power turbine.

Other features and advantages of the present invention will become more apparent from the following detailed description, taken in conjunction with the accompanying drawings, which illustrate, by way of example, one specific embodiment of the invention.

FIGURE 1 is a somewhat schematic representation of a gas turbine engine system embodying the novel features of this invention; and

FIGURE 2 is an enlarged fragmented vertical section illustrating construction details of a preferred continuously variable transmission in the form of a toroidal traction drive for use in the engine system of the embodiment of FIGURE 1.

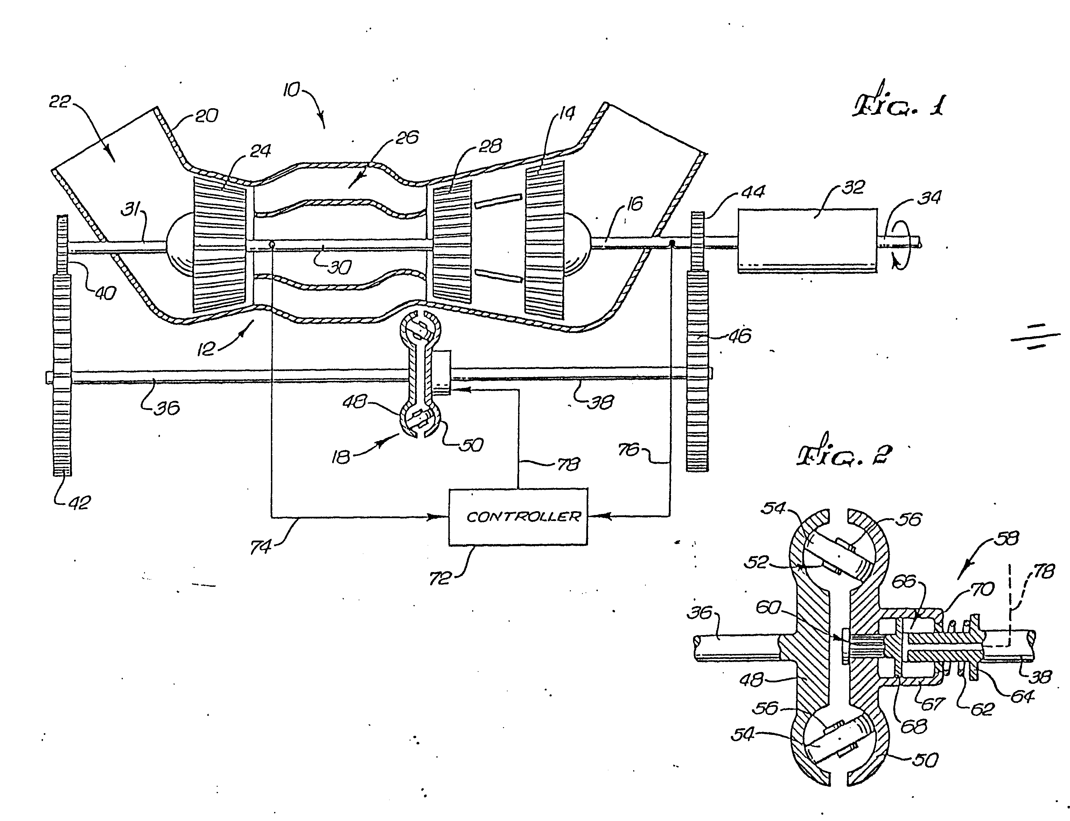

As shown in the exemplary drawings, a gas turbine engine system referred to in FIGURE 1, generally by the reference numeral 10 is provided for use in powering a ground vehicle, such as a truck, bus, automobile, or the like. The system 10 comprises a gas turbine engine having a turbo-compressor gas generator section 12 for rotatably driving a free power output turbine 14 carried by a power output drive shaft 16, which is in turn adapted for coupling rotational motion to the drive wheels (not shown) of the ground vehicle. The system further includes a declutchable continuously variable transmission in the form of a toroidal traction drive 18 for selective mechanical linking of the
gas generator section 12 and the free power turbine
14 for bidirectional transfer of power therebetween.
provides The gas turbine engine system 10 of this
embodiment of the invention provides a relatively
simple, relatively low-stress nonhydraulic means
for transferring energy in either direction between
the gas generator section 12 and the free power
turbine 14 of a gas turbine engine, and thereby
substantial improvements in the overall
operating efficiency and fuel economy of the engine
in a ground vehicle power plant environment. More
particularly, the system 10 includes the toroidal
traction drive 18 which permits feedback of power
mechanically from the free power turbine 14 to
the gas generator section 12 during braking and/or
speed range shifting transients wherein a reduction
in power turbine rotational speed is desired. Alternatively,
the toroidal traction drive 18 permits mechanical
power transfer from the gas generator section 12
to the free power turbine 14 to supplement the
net power output of the turbine 14 during other
modes of engine operation, such as part-load operation.

The gas turbine engine system 10 is illustrated
somewhat schematically in FIGURE 1 to include an
engine housing 20 of suitable configuration to
include an air intake 22 through which ambient
air is drawn into communication with the gas generator
section 12 of the engine. The gas generator section
12 conventionally includes a compressor 24 for
compressing the intake air and for discharging
the compressed air into a combustion chamber 26 of a combustor. The compressed air is admixed with an appropriate quantity of fuel and combusted within the combustion chamber 26 to result in a relatively high mass flow of relatively high energy exhaust gases which are discharged from the combustor into driving engagement with a first stage turbine 28. The high energy exhaust gases thus rotatably drive the first stage turbine 28 which is carried on a rotatable shaft 30 common to the compressor 24 whereby the first stage turbine 28 drives the compressor 24 to provide the engine with a supply of compressed air, all in a well known manner.

The exhaust gases flow within the housing 20 past the first stage turbine 28 into driving communication with a second stage turbine carried on the output drive shaft 16, wherein this second stage turbine comprises the free power output turbine 14 rotatable independently of the gas generator section 12. The free power turbine 14 thus converts energy in the exhaust gases to rotational motion of the drive shaft 16 for rotatably driving the drive wheels (not shown) of a ground vehicle. In a typical ground vehicle application, this driving coupling is achieved by connecting the drive shaft 16 to a conventional variable speed range vehicle transmission 32, such as an automatically shifted or manually shifted multiple speed range transmission of the type ordinarily provided with ground vehicles, wherein the transmission is coupled to the appropriate vehicle drive wheels (not shown) via a driven shaft 34.

The toroidal traction drive 18 is provided for selective mechanical coupling of the gas generator section 12 and the free power turbine 14 for bidirectional power transfer therebetween. More particularly, in the exemplary embodiment shown in FIGURE 1, the toroidal traction drive 18 is mechanically coupled between a pair of coaxial auxiliary shafts 36 and 38 which are respectively coupled via pairs of reduction gears 40,42, and 44,46 to an extension portion 31 of the gas generator section shaft 30 and to the output drive shaft 16. The toroidal traction drive thus provides a direct mechanical linking component which advantageously rotates at a rotational speed considerably less than the rotational speed of the gas generator section 12 and the free power turbine 14, depending upon the design characteristics of the reduction gears.

The toroidal traction drive comprises as shown, in more detail in FIGURE 2, a conventional toroidal traction drive assembly including a pair of generally complementary-shaped and axially separated lobes 48 and 50 defining a toroidal chamber 52 therebetween. As illustrated, the lobe 48 is secured to the auxiliary shaft 36 for rotation therewith, and the other lobe 50 is supported for rotation with the other auxiliary shaft 38, as will be described in more detail. Importantly, an annularly arranged set of traction rollers 54, two of which are illustrated, are disposed within the toroidal chamber 52 and journalled within an angularly adjustable cage 56 so that diametrically opposed portions of the drive wheel 54 are drivingly engageable with the chamber-defining surfaces of the lobes 48 and 50 to transfer rotational motion therebetween. The cage 56 is adjustable to vary the angular relationship of the drive wheels 54 relative to the lobes to vary the drive ratio between the auxiliary shafts 36 and 38. Conveniently, toroidal traction drives of this general type are generally known to those skilled in the art, and thus are not shown or described in more detail herein. However, for a more specific discussion of the construction and operation of toroidal traction drives, see, for example U.S. Patent Nos. 2,850,910, 2,959,973; and 2,971,390 which are incorporated by reference herein.

The toroidal traction drive 18 is adapted for selective engagement and disengagement by means of a clutch mechanism 58, whereby the transfer of power between the gas generator section 12 and the free power turbine 14 can be controlled as desired. This clutch mechanism 58 as illustrated in one exemplary form in FIGURE 2, includes a splined connection between the auxiliary shaft 38 and the traction drive lobe 50, as referred to by the arrow 60, to permit slight axial displacement of the lobe 50 relative to the shaft 38 for engaging and disengaging the traction drive. A spring 62 reacts between a radial flange 64 on the shaft 38 and a portion of the lobe 50 to urge the lobe toward a normally engaged position as depicted in FIGURE 2.

Disengagement can be achieved, for example, by supplying a control fluid under pressure to a control chamber 66 which can be formed within a shell-like housing portion 67 on one side of the lobe 50. This control chamber 66 extends annularly about the auxiliary shaft 38 and axially between a radial flange 68 on the shaft and an annular wall 70 spaced axially from the flange 68 in a direction away from the rollers 54. Accordingly, pressurised control fluid supplied to the control chamber 64 reacts against the flange 68 to urge the lobe 50 axially against the spring 62 and away from the rollers 54 thereby disengaging the lobes 48 and 50 relative to each other.

A controller 72 (Figure 1) is provided responsive to various engine operating parameters to control operation of the toroidal traction drive 18. More particularly, the controller 72 can be made responsive to a variety of engine parameters such as rotational speed of the gas generator section and of the free power turbine, as illustrated by the control lines 74 and 76, to control the angular orientations of the rollers 54 to a selected drive ratio. Moreover, the controller 72 governs the supply and discharge of control.fluid from a suitable source (not shown) to the control chamber 66, as indicated by the lines 78 in FIGURES 1 and 2, to control traction drive engagement and disengagement.

In operation of the gas turbine engine 10, the toroidal traction drive 18 is maintained by the controller 72 in a declutched or disengaged state unless the relative speed ratio between the gas generator section 12 and the free power turbine 14 is within a preselected range within the design limits of the toroidal traction drive. Thus, during start-up conditions and idle conditions of the engine, the free power turbine 14 is at rest such that its rotational speed is zero, and during these conditions, the toroidal traction drive is disengaged by the clutch mechanism 58 to allow independent operation of the gas generator section without power transfer relative to the free power turbine. However, during other conditions of engine operation, the controller 72 causes engagement of the toroidal traction drive 18 to transfer rotational power between the gas generator section 12 and the power turbine 14 to enhance overall system operation.

More specifically, during a vehicle braking mode to slow vehicle velocity, the controller 72 responds, for example, to the reduction in fuel flow to the combustor or to other parameters, such as actuation of vehicle brakes, to engage the toroidal traction drive 18. When this occurs, the rapidly rotating power turbine 14 is drivingly connected to the gas generator section 12 to provide substantially immediate and relatively high horsepower dynamic braking to assist in slowing the vehicle. Importantly, however, the rotational energy of the free power turbine is not wasted, but instead a substantial portion thereof is transferred to the gas generator section to maintain or increase the speed thereof.

Accordingly, the energy is stored where it can be given up to the engine air flow during a subsequent acceleration, thereby resulting in improvements in engine fuel economy.

In addition, the controller 72 can be programmed to engage the toroidal traction drive 18 during shifting of the transmission 32 from one speed range to another. More particularly, prior to shifting from a lower speed range to a higher speed range, the free power turbine 14 is accelerated to a substantially rated speed in the lower speed range whereupon the transmission 32 uncouples the drive shaft 32 from the vehicle drive wheels. At this point in time, it is required to slow the free power turbine normally to about 50-65 percent rated speed before the transmission 32 can be shifted to the higher speed range and reengaged. To avoid delays during the shift transient the toroidal traction drive 18 is engaged to dynamically brake the free power turbine 14 thereby slowing rotation thereof in the same manner as described with respect to the braking mode. Rotational energy is thus transferred from the power turbine to the gas generator section where it is stored temporarily and then given up to the engine air flow during initial acceleration in the higher speed range.

During some engine operating conditions, such as during part-load operation, the controller 72 engages the toroidal traction drive 18 to permit transfer of power from the gas generator section 12 to the free power turbine 14. That is, during part-load operation, it may be desirable to couple the toroidal traction drive to the gas generator section and thus apply a mechanical load thereto to permit operation of the gas generator section at a higher power output level more closely matching the operation design point for optimum efficiency and fuel economy. The gas generator section 12 thus provides high energy exhaust gases to drive the free power turbine 14  and also to supplementally drive the free power turbine 14 via the toroidal traction drive. In this manner, a higher overall engine efficiency and power output are achieved.

The gas turbine engine system 10 of this embodiment of the invention thus provides a practical nonhydraulic and continuously variable transmission for selective power transfer bidirectionally between a turbo-compressor gas generator section and a free power turbine. Engagement of the continuously · variable transmission is accurately controlled in response to appropriate  system parameters and advantageously constitutes a relatively low stress and low wear operation by  appropriate selection of the traction drive speed ratio prior to engagement. However, when disengaged, the toroidal traction drive runs free with minimal power consumption.

A variety of modifications and improvements to the invention described herein are believed to be apparent to one of ordinary skill in the art. For example, if desired,  the toroidal traction drive may be coupled directly between the gas generator section 12 and the free power turbine 14 without use of the reduction gear sets 40,42, and 44,46.

**0104921**

CLAIMS

1. A gas turbine engine system comprising a gas turbine engine (10) including a turbo-compressor gas generator section (12) and a free power turbine (14) and apparatus for transferring power bidirectionally between the gas generator section and the power turbine, said apparatus comprising a non-hydraulic continuously-variable declutchable transmission (18) having a pair of engageable drive members (48,50) coupled respectively for rotation with the gas generator section and the power turbine; and releasable clutch means (58) for selectively engaging said drive members (48,50) one with the other for mechanically transferring power bidirectionally between said gas generator section (12) and said free power turbine (14)..

2. Apparatus as set forth in Claim 1 wherein continuously-variable transmission (18) comprises a toroidal traction drive mechanism (18) and wherein the clutch means (58) is operable to controllably displace at least one of the said drive members (48,50) of the toroidal traction drive mechanism relative to the other said drive member for selective engagement and disengagement of the toroidal traction drive mechanism.

3. A system as set forth in Claim 2 wherein said drive members (48,50) of the toroidal traction drive mechanism (18) comprisesa pair of lobes (48,50) coupled respectively for rotation with the gas generator section (12) and the free power turbine (14) and co-operating to define therebetween a generally toroidal chamber (52) and further including an annularly arranged set of drive rollers (54) within said chamber (52) for frictional engagement with said lobes (48,50) and a cage (56) for angularly adjusting said drive rollers (54) relative to said lobes for varying the transmission ratio of the toroidal traction drive mechanism (18).

4. A system as set forth in Claim 3 wherein said clutch means (58) comprises means for selectively displacing one of said lobes (48,50) axially toward and away from the other of said lobes for selective frictional engagement and disengagement with respect to said drive rollers (54).

5. A system as set forth in Claim 4 which further includes a controller (72) responsive to selected system operating parameters for operating the clutch (58) for displacing said one of said lobes (48,50).

6. A system as set forth in any one of Claims 1-5 wherein the gas generator section (12) includes a first rotatable shaft (30) and the free power turbine (14) is carried by a second rotatable shaft (18), and further including a pair of generally coaxial auxiliary shafts (36,38) coupled respectively to said pair of drive members (48,50) and through respective sets of reduction gears (40,42, and 44,46) to said first and second rotatable shafts (30,16).

7.     A' system as set forth in any one of Claims 1-6 in which said gas generator section (12) has a compressor (24), a combustor (26) and a first turbine (28) operable for supplying a relatively high mass flow of gases for rotatably driving said free power turbine (14).

8.     In a gas turbine engine system (10) particulary for use in a ground vehicle, including a turbo-compressor gas generator section (12 ) for driving a free power turbine (14) apparatus for transferring power bidirectionally between the gas generator section (12) and the power turbine ( 14), comprising first and second generally coaxial auxiliary shafts (30,16) coupled respectively to the gas generator section (12) and the power turbine (14) for rotation therewith; a toroidal traction drive (18) having a pair of lobes (48,50) coupled respectively for rotation with said first and second auxiliary shafts (30,16) and co-operating to define a generally toroidal chamber (52) an annularly arranged set of drive rollers (54) within said chamber (52) for frictional engagement with said lobes (48,50) and a cage (56) for supporting and angularly adjusting said rollers (54) relative to said lobes (48,50) to vary the transmission ratio of the toroidal traction drive (18); and clutch means (58) for displacing one of said lobes (48,50) axially toward and away from the other of said lobes for selective frictional engagement and disengagement with respect to said drive rollers (54) for engaging and releasing the toroidal traction drive (18).

9.    Apparatus as set forth in Claim 8 which further includes a controller (72) responsive to selected system operating parameters for operating said clutch means (58) for displacing said one of said lobes (48,50).

10.    Apparatus as set forth in Claim 8 or Claim 9 wherein said first and second auxiliary shafts (30,16) are coupled to the gas generator section (12) and the free power turbine (18) through respective sets of reduction gears (40,42, and 44,46).

11.    For use in a gas turbine engine system (10) including a turbo-compressor gas generator section (12) for driving a free power turbine (14) a method of transferring power between the gas generator and the power turbine, comprising the steps of:coupling a non-hydraulic continuously-variable selectively-disengageable transmission (18) having a pair of drive members (48,50) between the gas generator section (12) and the free power turbine (14) with one of the drive members (48) coupled for rotation with the gas generator section (12) and the other of the drive members (50) coupled for rotation with the power turbine (14), and selectively engaging and disengaging the transmission )(18) in response to system operating parameters to selectively transfer power between the gas generator section and the power turbine.

0104921

12. The method of Claim 11 wherein the continuously-variable transmission (18) comprises a toroidal traction drive provided with a clutch (58) for selectively engaging and releasing its said drive members (48,50).

13. The method of Claim 11 or Claim 12 wherein said engaging and disengaging step comprises selectively engaging the continuously-variable transmission (18) in response to system operating parameters indicative of a braking mode.

14. The method of Claim 11 or Claim 12 wherein said engaging and disengaging step comprises selectively engaging the continuously-variable transmission (18) in response to system operating parameters indicative of shifting from one speed range to another.

15. The method of Claim 11 or Claim 12 wherein said engaging and disengaging step comprises selectively engaging the continuously-variable transmission (18) in response to system operating parameters indicative of part-load operation.

16. The method of any one of Claims 11-15 including the steps of coupling the said drive members (48,50) of the transmission (18) to the gas generator section (12) and the free power turbine (14) through respective sets of reduction gears (40,42 and 44,46).

17. The method of any one of Claims 11-16 wherein said engaging and disengaging step comprises moving at least one of the said drive members (48,50) of the continuously-variable transmission (18) axially relative to the other to engage or disengage the transmission.

Fig. 1

Fig. 2

CONTROLLER